# EUROPÄISCHE PATENTSCHRIFT

(11) **EP 0 735 355 B1**
(45) Veröffentlichungstag und Bekanntmachung des Hinweises auf die Patenterteilung: **16.08.2001**
(21) Anmeldenummer: 96101366.1
(22) Anmeldetag: 31.01.1996
(51) Int. Cl.: G01M 1/04

(54) **Spannvorrichtung zum Aufspannen von auszuwuchtenden Rotationskörpern, insbesondere von Kraftfahrzeugrädern, auf einer Hauptwelle einer Auswuchtmaschine**
Device for setting rotary bodies to be balanced, in particular vehicle wheels, on the main shaft of a balancing machine
Dispositif de fixation de corps de révolution à équilibrer, en particulier des roues de véhicule, sur l'arbre principal d'une machine d'équilibrage

(30) Priorität: 28.03.1995 DE 19511405
(43) Veröffentlichungstag der Anmeldung: 02.10.1996
(73) Patentinhaber: Snap-On Deutschland Holding GmbH, 40822 Mettmann (DE)
(72) Erfinder: Rossteuscher, Gerhard, KBN 472 Belleville, Ontario (CA)
(74) Vertreter: Nöth, Heinz, Dipl.-Phys.

(56) Entgegenhaltungen:
- DE-A- 2 424 668
- DE-A- 3 400 505
- DE-U- 9 205 071

## Beschreibung

Die Erfindung betrifft eine Spannvorrichtung zum Aufspannen von auszuwuchtenden Rotationskörpern, insbesondere von Kraftfahrzeugrädern, auf einer Hauptwelle einer Auswuchtmaschine mit den Merkmalen des Oberbegriffs des Anspruches 1.

Bei einer derartigen aus der DE 92 05 071 U bekannten Spannvorrichtung ist neben einem fest mit der Hauptwelle der Auswuchtmaschine verbundenen Anschlagflansch ein weiterer mit einer Federkraft beaufschlagter Flansch vorgesehen, welcher durch die Federkraft, die auch einen Zentrierkonus beaufschlagt, gegen den Rotationskörper angedrückt wird. Zum Festspannen des Rotationskörpers wird ein handbetätigter Drucktopf auf die Hauptwelle aufgeschraubt und von der anderen Seite her gegen den Rotationskörper angedrückt, wobei von dem fest mit der Hauptwelle verbundenen Anlageflansch der wesentliche Teil der vom Drucktopf ausgeübten Spannkraft aufgenommen wird. Die gesamte erforderliche Spannkraft muß von einer Bedienungsperson per Hand aufgebracht werden. Somit ist nicht nur beim Festspannen des Rotationskörpers, sondern auch beim Lösen ein erheblicher Kraftaufwand von der Bedienungsperson zu erbringen.

Aus der DE 34 00 506 A ist es bei einer Spannvorrichtung zum Aufspannen von auszuwuchtenden Kraftfahrzeugrädern bekannt, den Anlageflansch zur Verringerung der von der Bedienungsperson aufzuwendenden Kraftaufwand beim Festspannen des Kraftfahrzeugrades hydraulisch oder pneumatisch in axialer Richtung gegen das zentriert gehaltene Kraftfahrzeugrad zu drücken. Das Druckmedium wird dabei in einen Arbeitsraum eingebracht, der von gegeneinander verschiebbaren Teilen umgeben ist, wobei mehrere Dichtungen erforderlich sind, um den Arbeitsraum nach außen hin abzudichten.

Bei einer weiteren aus der DE-OS 24 24 668 bekannten Spannvorrichtung wird ein Kraftfahrzeugrad an einer Auswuchtmaschine mit seiner mittigen Felgenöffnung durch einen Zentrierkonus an der Hauptwelle zentriert und gegen einen Anlageflansch gespannt. Die dafür erforderliche Spannkraft wird ebenfalls von der Bedienungsperson aufgebracht.

Aufgabe der Erfindung ist es, eine Spannvorrichtung der eingangs genannten Art zu schaffen, bei welcher mit einfachen Mitteln der von der Bedienungsperson beim Befestigen des Rotationskörpers aufzubringende Kraftaufwand verringert wird.

Diese Aufgabe wird erfindungsgemäß durch die kennzeichnenden Merkmale des Patentanspruches 1 gelöst. Vorteilhafte Ausgestaltungen der Spannvorrichtung sind in den abhängigen Patentansprüchen angegeben.

Der zum Einsatz kommende wenigstens eine in axialer Richtung pneumatisch expandierbare Element eignet sich auch zum Nachrüsten von vorhandenen Auswuchtmaschinen einfacherer Bauart, die noch keine mechanisch bedienbare Betätigungseinrichtungen aufweisen, wie beispielsweise bei Auswuchtmaschinen mit einem Zuganker in einer Axialbohrung der Hauptwelle.

Der Luftbalg bildet eine besonders einfache und geeignete Betätigungseinrichtung, mit welcher die Spannkraft schnell und sicher erzeugt werden kann. Die erforderliche Druckluftversorgung steht in Werkstätten bereit oder sie kann mit einem elektrischen Kompressor erzeugt werden. Insbesondere ein ringförmiger Luftbalg, ist um die Hauptwelle herum angebracht. Wenn dieser drehbar auf der Hauptwelle gelagert ist, ist die Luftzuleitung einfacher zu gestalten als bei einem mitrotierenden Luftbalg, der ein spezielles Luftanschlußelement benötigt.

Vorzugsweise enthält die Spannvorrichtung eine Hülse, auf der einige oder alle Bauteile der Spannvorrichtung angebracht sind. Diese Spannvorrichtung läßt sich problemlos auf vorhandenen Hauptwellen von Auswuchtmaschinen anbringen, ohne daß an der Hauptwelle Anpassungen vorgenommen werden müßten. Mit einer Ausgleichshülse können standardisierte Bauteile der Spannvorrichtung auch bei Hauptwellen mit unterschiedlichen Abmessungen oder Gestaltungen verwendet werden.

Nachfolgend wird die Erfindung anhand eines Ausführungsbeispiels unter Bezugnahme auf Zeichnungen näher erläutert. Es zeigt:
- Fig. 1: in einem axialen Längsschnitt die Spannvorrichtung auf einer Hauptwelle einer Auswuchtmaschine; und
- Fig. 2: in schematischer, vereinfachter Darstellung die Spannvorrichtung mit einer Festlegeeinrichtung für ein Druckelement.

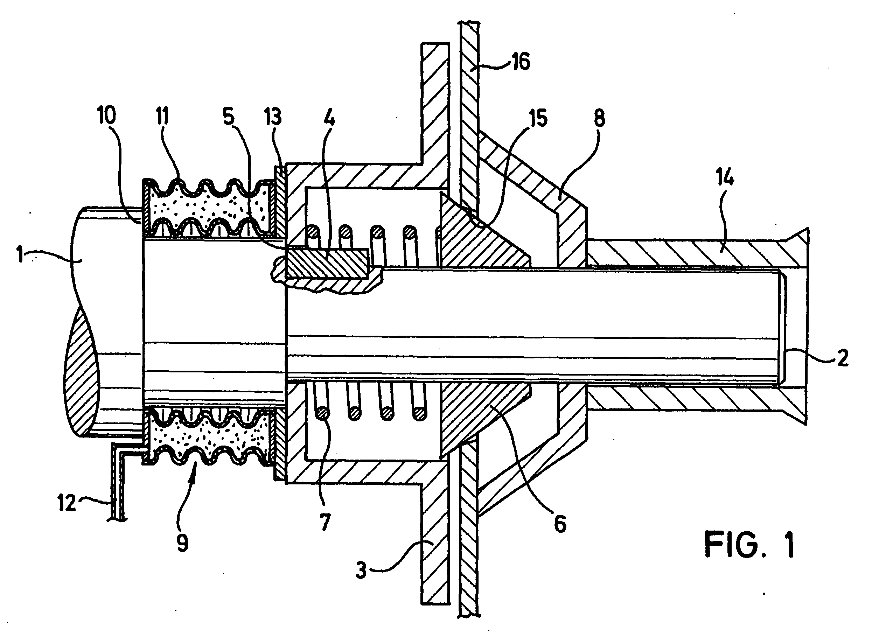

Eine Auswuchtmaschine weist eine Hauptwelle 1 mit einem freien Wellenende 2 auf. Die Hauptwelle 1 ist zum Durchführen eines Auswuchtvorganges in bekannter Weise antreibbar und mit geeigneten Kraftmeßeinrichtungen zum Erfassen einer Unwucht versehen. Ein Anlageflansch 3 ist auf der Hauptwelle 1 axial verschiebbar und in Umfangsrichtung, z. B. durch ein Keilnutprofil 4, drehfest gelagert. In Richtung zur Auswuchtmaschine (nach links in Figur 1) stützt sich der Anlageflansch 3 an einem Absatz 5, einem Bund oder dergleichen axial ab. Ein Zentrierkonus 6 ist auf der Hauptwelle 1 radial spielfrei geführt und durch eine Spiralfeder 7, die sich am Anlageflansch 3 abstützen kann, federelastisch in Richtung zur Auswuchtmaschine abgestützt.

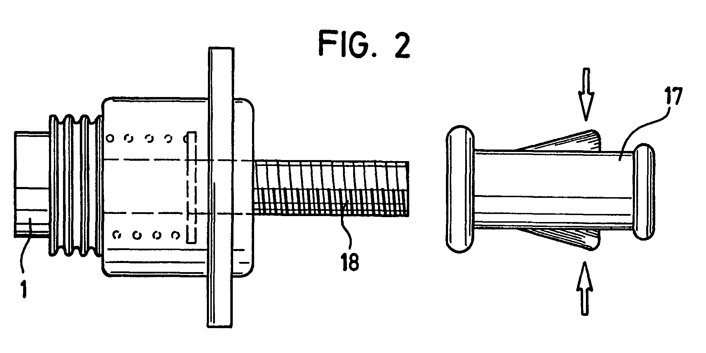

Über das freie Wellenende 2 kann ein Drucktopf 8 auf der Hauptwelle 1 angeordnet und festgelegt werden. Die Festlegung kann dadurch vorgenommen werden, daß der Drucktopf 8, der z. B. mit einer Gewindehülse 14 verbunden ist, mit dieser auf ein Außengewinde (nicht dargestellt) an der Hauptwelle 1 geschraubt und gegen Lösen blockiert wird. Der Drucktopf 8 kann auch durch einen Bajonettverschluß (nicht dargestellt) oder durch eine separate Klemm- oder Rasteinrichtung festgelegt werden, wie beispielsweise durch eine Schnellverschlußmutter 17 (Fig. 2), die Riegelelemente aufweist, die nach dem axialen Aufschieben der Mutter 17 auf das freie Wellenende 2 der Hauptwelle 1 verriegelnd in ein Gewinde 18 auf der Hauptwelle 1 eingreifen und durch Betätigung einer Entriegelung wieder freigegeben werden kann.

Des weiteren ist eine Betätigungseinrichtung 9 auf der Hauptwelle 1 zwischen dem Anlageflansch 3 und einem maschinenseitigen Wellenabsatz 10 der Hauptwelle 1 angeordnet. Die Betätigungseinrichtung 9 ist beispielsweise ein axiales Expansionselement, das als ein ringförmiger Luftbalg 11 ausgeführt ist, der einen Luftanschluß 12 zur pneumatischen Betätigung aufweist. Durch Luftzufuhr erweitert sich der Luftbalg 11 axial und übt, da er sich an dem Wellenabsatz 10 abstützt, eine axiale Druckkraft und eine Verschiebebewegung auf den Anlageflansch 3 aus.

Der Luftbalg 11 kann auf der Hauptwelle 1 drehbar gelagert sein, so daß er bei Rotation der Hauptwelle 1 mit dieser nicht mitrotiert. Dann kann der Luftanschluß 12 als einfache Zuleitung gebildet sein. Da sich der Anlageflansch 3 mit der Hauptwelle 1 mitdreht, ist zwischen dem Luftbalg 11 und dem Anlageflansch 3 ein axialkraftübertragendes Bewegungsausgleichselement 13 (schematisch dargestellt, z. B. ein Axiallager) zum Ausgleichen der Relativbewegungen angeordnet.

Um ein Kraftfahrzeugrad (oder einen beliebigen Rotationskörper mit: mittiger Zentrieröffnung) zum Auswuchten auf der Hauptwelle 1 der Auswuchtmaschine festzuspannen, wird dieses mit seiner zentrischen Felgenöffnung 15 vom Wellenende 2 her auf die Hauptwelle 1 aufgeschoben und an den Zentrierkonus 6 angelegt, so daß dieser in die Felgenöffnung 15 vorzentrierend eingreift. Der Drucktopf 8 wird auf der Hauptwelle 1 angebracht und in axialer Richtung gegen den Rotationskörper bzw. die Felge 16 bewegt, bis er diese auf dem von der Feder 7 federelastisch axial abgestützten Zentrierkonus 6 zentriert hat. Die Felge 16 liegt dabei noch nicht an dem Anlageflansch 3 an. Der Drucktopf 8 wird in dieser Stellung an der Hauptwelle 1 festgelegt (durch Klemmung, Rastung oder Bajonettverschluß). Zur Festlegung für die Zentrierung ist von der Bedienperson per Hand eine Kraft aufzubringen, die wesentlich geringer ist als die für das Festspannen bzw. Festklemmen des Rotationskörpers erforderliche Kraft.

Anschließend wird der Luftbalg 11 durch pneumatische Betätigung, d. h. durch Luftzufuhr unter Druck gesetzt, auf den er durch axiale Erweiterung bzw. Verlängerung reagiert. Durch diese axiale Erweiterung wird der Anlageflansch 3 gegen die Felge 16 des zwischen Drucktopf 8 und Zentrierkonus 6 gehaltenen Kraftfahrzeugrades verschoben, wobei seine Zentrierung an dem unter Federspannung axial gehaltenen Zentrierkonus 6 erhalten bleibt. In Abhängigkeit von der pneumatisch einstellbaren Axialkraft wird nun die Felge 16 mit der erforderlichen Spann- oder Klemmkraft gegen den Drucktopf 8 gedrückt, so daß das Kraftfahrzeugrad für seine Rotation und Beschleunigung beim Auswuchten bezüglich der Hauptwelle 1 ausreichend drehfest befestigt ist.

Die beschriebene Spannvorrichtung kann teilweise oder gesamt (mit Luftbalg) auf einer Hülse angeordnet sein, die auf einer Hauptwelle angebracht und festgelegt werden kann. Damit läßt sich eine besonders einfache Nachrüstung vorhandener Auswuchtmaschinen ohne Veränderung der Hauptwelle durchführen. In diesem Fall enthält die Hülse die Einrichtungen zum drehfesten Festlegen des Anlageflansches (mittels Keilwelle, Vielkeilprofil oder beliebigem Formschlußprofil) und bzw. zum Festlegen des Drucktopfes (z. B. über eine Gegenmutter mit Bajonettverschluß, eine schraubbare Mutter zum Eingriff mit einem Außengewinde an der Hülse oder durch eine Schnellverschlußmutter).

## Patentansprüche

1. Spannvorrichtung zum Aufspannen von auszuwuchtenden Rotationskörpern, insbesondere von Kraftfahrzeugrädern, auf einer Hauptwelle (1) einer Auswuchtmaschine, mit einem an der Hauptwelle axial federelastisch abgestützten Zentrierkonus (6) zum Zentrieren des Rotationskörpers (16) bezüglich der Hauptwelle (1),
mit einem an der Hauptwelle (1) festlegbaren Druckelement (8) zum Andrücken des Rotationskörpers gegen den Zentrierkonus (6) in eine Zentrierposition; und
mit einem Anlageflansch (3), welcher zur Gegenhalterung des Rotationskörpers (16) gegen das Druckelement (8) an der Hauptwelle (1) drehfest und axial verschiebbar gelagert und durch eine Betätigungseinrichtung (9) gegen den zentriert gehaltenen Rotationskörper (16) drückbar ist,
dadurch gekennzeichnet, dass die Betätigungseinrichtung (9) zumindest einen an der Hauptwelle (1) angebrachten, pneumatisch in axialer Richtung expandierbaren Luftbalg (11) aufweist.

2. Spannvorrichtung nach Anspruch 1, dadurch gekennzeichnet, dass der Lufbalg (11) ringförmig ist und am Umfang der Hauptwelle (1) gelagert ist.

3. Spannvorrichtung nach Anspruch 2, dadurch gekennzeichnet, dass der Luftbalg (11) auf der Hauptwelle (1) drehbar gelagert ist.

4. Spannvorrichtung nach einem der Ansprüche 1 bis 3, dadurch gekennzeichnet, dass das Druckelement (8) topfförmig ist.

5. Spannvorrichtung nach einem der Ansprüche 1 bis 4, dadurch gekennzeichnet, dass der Rotationskörper (16) ein Kraftfahrzeugrad mit einer Felge mit mittiger Zentrieröffnung ist.

6. Spannvorrichtung nach einem der Ansprüche 1 bis 4, dadurch gekennzeichnet, dass eine Hülse vorgesehen ist, auf der der Anlageflansch (3), der Zentrierkonus (6) und das Druckelement (8) gelagert sind und die auf der Hauptwelle (1) festlegbar ist.

7. Spannvorrichtung nach Anspruch 6, dadurch gekennzeichnet, dass der Luftbalg (11) auf der Hülse gelagert ist.

8. Spannvorrichtung nach Anspruch 6 oder 7, dadurch gekennzeichnet, dass die Hülse eine Ausgleichshülse zum Anpassen an unterschiedliche Hauptwellen ist.

## Claims

1. A clamping apparatus for clamping rotary bodies to be balanced, in particular motor vehicle wheels, on a main shaft (1) of a balancing machine, comprising a centering cone (6) which is axially resiliently supported on the main shaft for centering the rotary body (16) with respect to the main shaft (1),
a pressure element (8) which can be fixed to the main shaft (1) for pressing the rotary body against the centering cone (6) into a centering position, and
a contact flange (3) which for holding the rotary body (6) in opposite relationship against the pressure element (8) is mounted non-rotatably and axially displaceably on the main shaft (1) and can be pressed by an actuating device (9) against the centredly held rotary body (16),
characterised in that the actuating device (9) has at least one air bellows (11) which is disposed on the main shaft (1) and which can be pneumatically expanded in the axial direction.

2. A clamping apparatus according to claim 1 characterised in that the air bellows (11) is annular and is mounted to the periphery of the main shaft (1).

3. A clamping apparatus according to claim 2 characterised in that the air bellows (11) is mounted rotatably on the main shaft (11).

4. A clamping apparatus according to one of claims 1 to 3 characterised in that the pressure element (8) is cup-shaped.

5. A clamping apparatus according to one of claims 1 to 4 characterised in that the rotary body (6) is a motor vehicle wheel having a rim with a central centering opening.

6. A clamping apparatus according to one of claims 1 to 4 characterised in that there is provided a sleeve on which the contact flange (3), the centering cone (6) and the pressure element (8) are mounted and which can be fixed on the main shaft (1).

7. A clamping apparatus according to claim 6 characterised in that the air bellows (11) is mounted on the sleeve.

8. A clamping apparatus according to claim 6 or claim 7 characterised in that the sleeve is a compensating sleeve for adaptation to different main shafts.

## Revendications

1. Dispositif de blocage destiné à bloquer des corps de révolution à équilibrer, notamment des roues de véhicule automobile sur un arbre (1) principal d'une machine d'équilibrage, comprenant un cône (6) de centrage qui est soutenu, avec une élasticité de ressort axialement, sur l'arbre principal et qui est destiné à centrer le corps (16) de révolution par rapport à l'arbre (1) principal,
comprenant un élément (8) de pression pouvant être fixé sur l'arbre (1) principal et destiné à repousser le corps de révolution sur le cône (6) de centrage pour le mettre dans une position de centrage ;
comprenant une bride (3) d'appui qui est montée, sans possibilité de tourner mais avec possibilité de coulissement axial pour la fixation de la pièce (6) de révolution contre l'élément (8) de pression, sur l'arbre (1) principal et qui peut être repoussée par un dispositif (9) d'actionnement vers le corps (16) de révolution maintenu centré, caractérisé en ce que le dispositif (9) d'actionnement comporte au moins un soufflet (11) d'air pouvant être monté sur l'arbre (1) principal et pouvant s'expanser pneumatiquement en direction axiale.

2. Dispositif de blocage suivant la revendication 1, caractérisé en ce que le soufflet (11) d'air est annulaire et est monté sur le pourtour de l'arbre (1) principal.

3. Dispositif de blocage suivant la revendication 2, caractérisé en ce que le soufflet (11) d'air est monté avec possibilité de tourner sur l'arbre (1) principal.

4. Dispositif de blocage suivant l'une des revendications 1 à 3,
caractérisé en ce que le l'élément (8) de pression est en forme de boîte.

5. Dispositif de blocage suivant l'une des revendications 1 à 4, caractérisé en ce que le corps (16) de révolution est une roue de véhicule automobile ayant une jante à ouverture centrale de centrage.

6. Dispositif de blocage suivant l'une des revendications 1 à 4, caractérisé en ce qu'il est prévu un manchon sur lequel sont montés la bride (3) d'appui et le cône (6) de centrage et l'élément (8) de pression et qui peut être fixé sur l'arbre (1) principal.

7. Dispositif de blocage suivant la revendication 6, caractérisé en ce que le soufflet (11) d'air est monté sur le manchon.

8. Dispositif de blocage suivant la revendication 6 ou 7, caractérisé en ce que le manchon est un manchon de compensation destiné à s'adapter à des arbres principaux qui sont différents.
